# EUROPÄISCHE PATENTSCHRIFT

(11) **EP 4 194 498 B1**
(45) Veröffentlichungstag und Bekanntmachung des Hinweises auf die Patenterteilung: **16.10.2024**
(21) Anmeldenummer: 22211565.1
(22) Anmeldetag: 06.12.2022
(51) Int. Cl.: C08L 7/00, B60C 1/00, C08K 3/04, C08L 9/00

(54) **KAUTSCHUKMISCHUNG UND FAHRZEUGREIFEN**
RUBBER COMPOSITION AND VEHICLE TIRE
MÉLANGE DE CAOUTCHOUC ET PNEU DE VÉHICULE

(30) Priorität: 10.12.2021 DE 102021214115
(43) Veröffentlichungstag der Anmeldung: 14.06.2023
(73) Patentinhaber: Continental Reifen Deutschland GmbH, 30175 Hannover (DE)
(72) Erfinder: Huang, Menglong, 30165 Hannover (DE); Kügler, Merle, 30165 Hannover (DE); Schloesser, Jana, 30165 Hannover (DE); Vatterott, Christoph, 30165 Hannover (DE); Wei, Jianping, 30165 Hannover (DE); Hojdis, Nils, 30165 Hannover (DE); Wangenheim, Ulrike, 30165 Hannover (DE); Glöckner, Andreas, 30165 Hannover (DE); Klokkers, Erin, 30165 Hannover (DE)
(74) Vertreter: Continental Corporation

(56) Entgegenhaltungen:
- EP-A1- 0 872 514
- EP-A1- 1 470 937
- EP-A1- 1 529 806
- EP-A1- 1 582 559
- EP-A1- 1 808 456
- DE-A1- 102016 201 053

## Beschreibung

Die Erfindung betrifft eine schwefelvernetzbare Kautschukmischung, insbesondere für den Laufstreifen von Nutzfahrzeugreifen.

Die Erfindung betrifft ferner einen Fahrzeugreifen mit einem Laufstreifen, dessen zumindest mit der Fahrbahn in Berührung kommender Teil aus einer solchen, mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt, so ist beispielsweise eine Verbesserung des Abriebverhaltens üblicherweise mit einer Verschlechterung des Bremsverhaltens auf trockener Fahrbahn verbunden. An Laufstreifenmischungen für PKW- und Van-Reifen werden zum Beispiel höchste Anforderungen hinsichtlich des Nass- und Trockenbremsens, des Abriebwiderstands, des Cut-und-Chip-Verhaltens, des Rollwiderstands, der Haltbarkeit und des Handlings gestellt.

Ein Zuschlagstoff, der schon seit über einem Jahrhundert in Kautschukmischungen als verstärkender Füllstoff eingesetzt wird, ist Ruß. Unterschiedlichste Typen von Rußen mit unterschiedlicher Struktur und Oberfläche, die in Kautschukmischungen unterschiedliche Eigenschaften bewirken, wurden entwickelt.

Aus WO 2015/161950 A1 ist beispielsweise eine Kautschukmischung bekannt, die einen Ruß mit einer hohen Struktur (DBP-Zahl gemäß ASTM D 2414 von 130 bis 200 mL/100 g) und einer niedrigen Oberfläche (Jodadsorptionszahl gemäß ASTM D 1510 von 40 bis 75 g/kg) aufweist.

Die EP 2 088 174 A2 offenbart Ruße mit unterschiedlichen Aggregatgrößenverteilungen und besserer Dispergierbarkeit in Kautschukmischungen.

Ein Ruß mit einer hohen Struktur und einer hohen Oberfläche sowie dessen Verhalten in Kautschukmischungen auf der Basis von synthetischen Kautschuken wird in SWOR, R. A.; HESS, W. M.; Micek, E. J. High structure tread carbon black solves technical compounding problems I / High structure tread carbon black solves technical compounding problems II. Elastomerics Vol. 123, Nr. 3 und 4 beschrieben.

Der Erfindung liegt die Aufgabe zugrunde, Kautschukmischungen für die Laufstreifen von Fahrzeugluftreifen bereitzustellen, die bei Reifen zu einem verbesserten Niveau hinsichtlich des Zielkonfliktes aus Rollwiderstand, Abrieb, Nassgriff und Cut-und-Chip-Verhalten führt und gleichzeitig eine gute Prozessierbarkeit aufweist. Das Cut-und-Chip-Verhalten wird dabei verstanden als das Verhalten im Hinblick auf Schnittverletzungen und den Materialverlust durch Abbröckelungen.

Gelöst wird diese Aufgabe erfindungsgemäß durch eine schwefelvernetzbare Kautschukmischung, insbesondere für den Laufstreifen von Nutzfahrzeugreifen, enthaltend wenigstens folgende Bestandteile:
- 5 bis 95 phr (Gewichtsteile, bezogen auf 100 Gewichtsteile der gesamten Kautschuke in der Mischung) Naturkautschuk
- bis zu 95 phr zumindest eines weiteren Dienkautschuks und
- 30 bis 150 phr zumindest eines Rußes, der eine DBP-Zahl gemäß ASTM D 2414 von 140 bis 220 ml/100 g und eine Jodadsorptionszahl gemäß ASTM D 1510 von mehr als 110 g/kg.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen. Die Masse aller in der Mischung vorhandenen Kautschuke addiert sich zu 100.

Überraschenderweise hat sich herausgestellt, dass durch den Einsatz eines Rußes mit einer hohen Struktur, erkennbar an einer DBP-Zahl gemäß ASTM D 2414 von 140 bis 220 ml/100 g, und einer hohen Oberfläche, erkennbar an einer Jodadsorptionszahl gemäß ASTM D 1510 von mehr als 110 g/kg, in Kautschukmischungen, die Naturkautschuk enthalten, eine Verbesserung der Eigenschaftsgruppe aus Rollwiderstand, Abrieb, Nassgriff und Cut-und-Chip-Verhalten erzielt werden kann. Die erfindungsgemäßen Kautschukmischungen lassen sich im grünen Zustand außerdem gut verarbeiten, da sie eine verringerte Porosität auch bei Lagerung aufweisen.

Die erfindungsgemäße Kautschukmischung enthält 30 bis 150 phr zumindest eines Rußes, der eine DBP-Zahl gemäß ASTM D 2414 von 140 bis 220 ml/100 g und eine Jodadsorptionszahl gemäß ASTM D 1510 von mehr als 110 g/kg. Es können auch mehrere Ruße mit derartiger Struktur und Oberfläche in der Kautschukmischung eingesetzt werden. Ein Ruß, der diese Eigenschaften aufweist, ist beispielsweise unter dem Handelsnamen BC2005 von der Firma Birla Carbon erhältlich.

Gemäß einer bevorzugten Ausführungsform der Erfindung weist der zumindest eine Ruß eine DBP-Zahl gemäß ASTM D 2414 von 160 bis 190 ml/100 g auf.

Um den Zielkonflikt zwischen Rollwiderstand, Abrieb, Nassgriff und Cut-und-Chip-Verhalten weiter zu verbessern, weist der zumindest eine Ruß eine Jodadsorptionszahl gemäß ASTM D 1510 von 115 bis 135 g/kg auf.

Um den Rollwiderstand, das Abriebverhalten und das Verarbeitungsverhalten weiter zu verbessern, hat es sich als vorteilhafterwiesen, wenn die Kautschukmischung 25 bis 70 phr zumindest eines Rußes, der eine DBP-Zahl gemäß ASTM D 2414 von 140 bis 220 ml/100 g und eine Jodadsorptionszahl gemäß ASTM D 1510 von mehr als 110 g/kg enthält.

Die Kautschukmischung enthält 10 bis 95 phr Naturkautschuk (natürliches Polyisopren, NR). Naturkautschuk wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter Naturkautschuk wird nicht synthetisches Polyisopren verstanden. Naturkautschuke aus verschiedenen Quellen können auch im Verschnitt eingesetzt werden. Der cis-1,4-Anteil im Naturkautschuk ist größer 99 Gew.-%.

Die Kautschukmischung enthält bis zu 90 phr zumindest eines weiteren Dienkautschuks. Zu den Dienkautschuken zählen alle Kautschuke mit einer ungesättigten Kohlenstoffkette, die sich zumindest teilweise von konjugierten Dienen ableiten. Unterschiedliche Dienkautschuke können dabei im Verschnitt eingesetzt werden.

Die Kautschukmischung kann als weiteren Dienkautschuk synthetisches Polyisopren (IR) enthalten. Dabei kann es sich sowohl um cis-1,4-Polyisopren als auch um 3,4-Polyisopren handeln. Bevorzugt ist allerdings die Verwendung von cis-1,4-Polyisoprenen mit einem cis-1,4-Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden.

Enthält die Kautschukmischung als weiteren Dienkautschuk Polybutadien (BR), kann es sich um cis-1,4-Polybutadien handeln. Als Polybutadiene können alle dem Fachmann bekannten Typen eingesetzt werden. Darunter fallen u.a. die sogenannten high-cis- und low-cis-Typen, wobei Polybutadiene mit einem cis-Anteil größer oder gleich 90 Gew.-% als high-cis-Typ und Polybutadiene mit einem cis-Anteil kleiner als 90 Gew.-% als low-cis-Typ bezeichnet wird. Bevorzugt ist die Verwendung von cis-1,4-Polybutadien mit einem cis-1,4-Anteil größer 90 Gew.-%, welches z. B. durch Lösungspolymerisation in Anwesenheit von Katalysatoren vom Typ der seltenen Erden hergestellt werden kann.

Als weitere Dienkautschuke sind Vinyl-Polybutadiene und Styrol-Butadien-Copolymere einsetzbar. Bei den Vinyl-Polybutadienen und Styrol-Butadien-Copolymeren kann es sich um lösungspolymerisierte Styrol-Butadien-Copolymere (S-SBR) mit einem Styrolgehalt, bezogen auf das Polymer, von bis zu 45 Gew.-% und einem Vinylgehalt (Gehalt an 1,2-gebundenem Butadien, bezogen auf das gesamte Polymer) von 10 bis 90 Gew.-% handeln, welche zum Beispiel unter Verwendung von Lithiumalkylen in organischem Lösungsmittel hergestellt werden können. Die S-SBR können auch gekoppelt und endgruppenmodifiziert sein. Es können aber auch emulsionspolymerisierte Styrol-Butadien-Copolymere (E-SBR) sowie Mischungen aus E-SBR und S-(S)BR eingesetzt werden. Der Styrolgehalt des E-SBR beträgt ca. 15 bis 50 Gew.-% und es können die aus dem Stand der Technik bekannten Typen, die durch Copolymerisation von Styrol und 1,3-Butadien in wässriger Emulsion erhalten wurden, verwendet werden.

Die in der Mischung eingesetzten Dienkautschuke, insbesondere die Polybutadiene und Styrol-Butadien-Copolymere, können auch in teilweiser oder vollständig funktionalisierter Form eingesetzt werden. Die Funktionalisierung kann dabei mit Gruppen erfolgen, die mit den verwendeten Füllstoffen, insbesondere mit OH-Gruppen tragenden Füllstoffen, wechselwirken können. Es kann sich dabei z. B. um Funktionalisierungen mit Hydroxylgruppen und/oder Epoxygruppen und/oder Siloxangruppen und/oder Aminogruppen und/oder Phthalocyaningruppen und/oder Carboxygruppen und/oder Silansulfidgruppen handeln. Die Dienkautschuke können zusätzlich oder alternativ auch gekoppelt sein.

Zusätzlich zu den genannten Dienkautschuken kann die Mischung aber auch noch andere Kautschuktypen, wie z. B. Styrol-Isopren-Butadien-Terpolymer, Butylkautschuk, Halobutylkautschuk oder Ethylen-Propylen-Dien-Kautschuk (EPDM), enthalten.

Gemäß einer bevorzugten Ausführungsform der Erfindung enthält die Kautschukmischung 70 bis 95 phr Naturkautschuk und 5 bis 30 phr Polybutadien. Auf diese Weise erhält man eine Kautschukmischung, die sich durch einen besonders geringen Abrieb und damit eine lange Reifenhaltbarkeit bei Verwendung der Mischung als Reifenlaufstreifen, insbesondere von Nutzfahrzeugreifen, auszeichnet.

Für eine Kautschukmischung, die sich besonders gut verarbeiten lässt, hat es sich als vorteilhafterwiese, wenn sie 30 bis 50 phr Naturkautschuk, 30 bis 50 phr Polybutadien und 10 bis 30 phr Styrol-Butadien-Kautschuk enthält.

Um das Abriebverhalten und das Cut-und-Chip-Verhalten weiter zu verbessern, hat es sich als vorteilhaft erwiesen, wenn die Kautschukmischung 5 bis 30 phr zumindest eines Kohlenwasserstoffharzes enthält.

Bei dem Kohlenwasserstoffharz kann es sich um aliphatische oder aromatische Kohlenwasserstoffharze handeln, die auch im Gemisch eingesetzt werden können. Derartige Harze sind beispielsweise Terpen-, Cs-, Cs-, Cumaron-Inden- und Dicyclopentadien (DCPD)-Harze, aus α-Methylstyrol hergestellte aromatische Harze sowie Copolymeren aus den Monomeren dieser Harztypen. Cs- bzw. C₉-Harze sind dabei Kohlenwasserstoffharze, die auf unterschiedlichen Cs- bzw. C₉-Monomeren basieren.

Gemäß einer bevorzugten Ausgestaltung der Erfindung handelt es sich bei dem Kohlenwasserstoffharz um ein aliphatisches Kohlenwasserstoffharz.

Die Kautschukmischung kann neben den bereits genannten speziellen Rußen weitere Füllstoffe, wie Ruße mit anderen Sturkturen und Oberflächen, Kieseläsuren, Alumosilicate, Kreide, Stärke, Magnesiumoxid, Titandioxid, Kautschukgele, Kohlenstoffnanoröhrchen, Graphit, Graphene oder sogenannte "carbon-silica dual-phase filler" in üblichen Mengen enthalten, wobei die Füllstoffe in Kombination eingesetzt werden können.

Sind in der Kautschukmischung Kieselsäuren enthalten, können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Zur Verbesserung der Verarbeitbarkeit und zur Anbindung von Kieselsäuren und anderen polaren Füllstoffen an den Dienkautschuk in den Kautschukmischungen wird vorzugsweise zumindest ein Silan-Kupplungsagens in Mengen von 1 - 15 phf (Gewichtsteile, bezogen auf 100 Gewichtsteile polaren Füllstoff) in der Kautschukmischung eingesetzt.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandenen polaren Füllstoffe, das heißt, dass andere eventuell vorhandene Füllstoffe wie Ruß nicht in die Berechnung der Menge an Silan-Kupplungsagens mit eingehen.

Die Silan-Kupplungsagenzien reagieren mit den oberflächlichen Silanolgruppen des polaren Füllstoffes oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanatopropyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

In der Kautschukmischung können weiterhin Weichmacher in Mengen von 1 bis 300 phr, bevorzugt von 5 bis 150 phr, besonders bevorzugt von 15 bis 90 phr, enthalten sein. Als Weichmacher können alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder Harze auf Basis natürlicher Quellen, eingesetzt werden.

Der oder die Weichmacher werden bei der Herstellung der erfindungsgemäßen Kautschukmischung bevorzugt in wenigstens einer Grundmischstufe zugegeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) oder Zinkkomplexe wie z. B. Zinkethylhexanoat,
c) Wachse,
d) Mastikationshilfsmittel, wie z. B. 2,2'-Dibenzamidodiphenyldisulfid (DBD), und
e) Verarbeitungshilfsmittel, wie z.B. Fettsäuresalze, wie z.B. Zinkseifen, und Fettsäureester und deren Derivate.

Der Mengenanteil der Gesamtmenge an weiteren Zusatzstoffen beträgt 3 bis 150 phr, bevorzugt 3 bis 100 phr und besonders bevorzugt 5 bis 80 phr.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung in Gummiprodukten, insbesondere in Fahrzeugluftreifen, herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung kann für unterschiedlichste Gummiprodukte eingesetzt werden. Vorzugsweise wird sie für die Herstellung von Fahrzeugreifen, wie PKW-, Van-, LKW- oder Zweiradreifen, verwendet, wobei die Kautschukmischung zumindest den mit der Fahrbahn in Berührung kommenden Teil des Laufstreifens bildet. Vorzugsweise ist der Fahrzeugreifen ein Nutzfahrzeugreifen, da bei diesen Reifen eine besonders hohe Abriebbeständigkeit und Beständigkeit gegen Rissbildung und Herausbrechen von Gummistücken gefordert wird.

Bei einem Fahrzeugreifen kann der Laufstreifen aus einer einzigen Mischung bestehen, die gemäß der Erfindung ausgebildet ist. Häufig weisen Fahrzeugluftreifen heute jedoch einen Laufstreifen mit einer sogenannten Cap/Base-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen Cap/Base-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Von der Erfindung sind sämtliche vorteilhaften Ausgestaltungen, die sich unter anderem in den Patentansprüchen widerspiegeln, umfasst. Insbesondere sind von der Erfindung auch Ausgestaltungen umfasst, die sich durch Kombination unterschiedlicher Merkmale, beispielsweise von Bestandteilen der Kautschukmischung, unterschiedlicher Abstufungen bei der Bevorzugung dieser Merkmale ergeben, sodass auch eine Kombination eines ersten als "bevorzugt" bezeichneten Merkmals oder im Rahmen einer vorteilhaften Ausführungsform beschriebenen Merkmals mit einem weiteren als z. B. "besonders bevorzugt" bezeichneten Merkmal von der Erfindung erfasst ist.

Die Erfindung soll nun anhand von Vergleichs- und Ausführungsbeispielen, die in den Tabellen 1 und 2 zusammengefasst sind, näher erläutert werden.

Die Vergleichsmischungen sind dabei mit V, erfindungsgemäße Mischung mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. Für die Mischungen der Tabelle 1 wurde in der zweiten Mischstufe die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Es wurden Fahrzeugluftreifen der Dimension 205/75 R17.5-CHS3 (124M) gebaut, deren Laufstreifen die in der Tabelle 1 angegeben Mischungen als Laufstreifen aufwiesen, und die folgenden Eigenschaften ermittelt:
- Rollwiderstand: gemäß ISO 28580:2018
- Nassbremsen: Bremsweg bei 80 km/h auf nassem Asphalt
- Cut-und-Chip-Verhalten: ermittelt durch Schuttwegekonvoifahrt mit mehreren identischen Fahrzeugen nach 1000 km, Auszählung und Vergleich der entstandenen Risse und Profilausbrüche
- Abrieb: Gewichtsverlust der jeweiligen Reifen nach 20000 km Straßenfahrt bei einer mittleren Temperatur von ca. +16 °C

Die ermittelten Werte wurden in Performance (Leistung) umgerechnet, wobei die Vergleichsmischung 1(V) bei jeder getesteten Eigenschaft auf 100 % Performance normiert wurde. Alle anderen Mischungsleistungen beziehen sich auf diese Vergleichsmischung 1(V). Hierbei bedeuten Werte < 100 % eine Verschlechterung der Eigenschaften, während Werte > 100 % eine Verbesserung darstellen.

Ferner wurden mit den unvulkanisierten Grundmischungen der Tabelle 2, die keine Vulkanisationschemikalien enthielten, Versuche zum Verhalten der Porosität durchgeführt. Die Porosität wird dabei definiert als die Materialdichteänderung in Prozent über einen bestimmten Zeitraum. Dazu wurde die Veränderung des Porositätsgrades der extrudierten, grünen, unvulkanisierten Mischung direkt nach dem Mischen und Extrudieren sowie nach zweiwöchiger Lagerung unter üblichen reifenfabriksüblichen Bedingungen ermittelt. Die Porosität der Vergleichsmischung 4(V) wurde auch hier wieder auf 100 % gesetzt. Ein höherer Wert zeigt einen höheren Porositätslevel und damit eine schlechtere Verarbeitbarkeit an.

**Tabelle 1**

| **Bestandteile** | **Einheit** | **1(V)** | **2(V)** | **3(E)** |
|---|---|---|---|---|
| Naturkautschuk | phr | 85 | 85 | 85 |
| cis-BR | phr | 15 | 15 | 15 |
| Ruß N220 | phr | 47 | - | - |
| Ruß N121 | phr | -- | 47 | |
| Ruß A^{a} | phr | - | - | 47 |
| Kieselsäure | phr | 6 | 6 | 6 |
| Weichmacher, Alterungsschutzmittel, Verarbeitungshilfsmittel | phr | 8 | 8 | 8 |
| Zinkoxid, Stearinsäure | phr | 5 | 5 | 5 |
| Beschleuniger | phr | 1,1 | 1,1 | 1,1 |
| Schwefel | phr | 1,1 | 1,1 | 1,1 |

| **Reifeneigenschaften** | | | | |
|---|---|---|---|---|
| Rollwiderstand | % | 100 | 101 | 103 |
| Nassbremsen | % | 100 | 97 | 102 |
| Cut-und-Chip-Verhalten | % | 100 | 100 | 100 |
| Abrieb | % | 100 | 110 | 118 |

| | | | | |
|---|---|---|---|---|
| ^{a} Ruß BC2005, Firma Birla, DBP-Zahl gemäß ASTM D 2414: 176 ml/100 g, Jodadsorptionszahl gemäß ASTM D 1510: 125 g/kg | | | | |

**Tabelle 2**

| **Bestandteile** | **Einheit** | **4(V)** | **5(V)** | **6(E)** |
|---|---|---|---|---|
| Naturkautschuk | phr | 40 | 40 | 40 |
| cis-BR | phr | 40 | 40 | 40 |
| SBR | phr | 20 | 20 | 20 |
| Ruß N220 | phr | 55 | - | - |
| Ruß N121 | phr | -- | 55 | |
| Ruß A^{a} | phr | - | - | 55 |
| Kieselsäure | phr | 6 | 6 | 6 |
| Weichmacher, Alterungsschutzmittel, Verarbeitungshilfsmittel | phr | 16 | 16 | 16 |
| Zinkoxid, Stearinsäure | phr | 5 | 5 | 5 |

| **Mischungseigenschaften** | | | | |
|---|---|---|---|---|
| Porosität direkt nach dem Mischen | % | 100 | 150 | 4 |
| Porosität nach zweiwöchiger Lagerung | % | 100 | 291 | 39 |

| | | | | |
|---|---|---|---|---|
| ^{a} Ruß BC2005, Firma Birla, DBP-Zahl gemäß ASTM D 2414: 176 ml/100 g, Jodadsorptionszahl gemäß ASTM D 1510: 125 g/kg | | | | |

Aus den Daten der Tabelle 1 wird ersichtlich, dass in Mischungen mit Naturkautschuk und einem Ruß mit hoher Struktur und hoher Oberfläche deutliche Verbesserungen im Abriebverhalten erzielt werden können, ohne dass dabei der Rollwiderstand und das Nassbremsen beeinträchtigt werden. Gleichzeitig kann durch die Verwendung des Rußes A die Porosität der Mischung deutlich reduziert werden. Diese Reduzierung der Porosität ist besonders stark ausgeprägt auch bei nach Lagerung der Grundmischung, wie die Tabelle 2 es belegt. Diese geringe Porosität gewährleistet eine sehr gute Verarbeitbarkeit/Prozessierbarkeit der Mischungen.

## Patentansprüche

1. Schwefelvernetzbare Kautschukmischung, insbesondere für den Laufstreifen von Nutzfahrzeugreifen, enthaltend wenigstens folgende Bestandteile:
- 5 bis 95 phr (Gewichtsteile, bezogen auf 100 Gewichtsteile der gesamten Kautschuke in der Mischung) Naturkautschuk
- bis zu 95 phr zumindest eines weiteren Dienkautschuks und
- 30 bis 150 phr zumindest eines Rußes, der eine DBP-Zahl gemäß ASTM D 2414 von 140 bis 220 ml/100 g und eine Jodadsorptionszahl gemäß ASTM D 1510 von mehr als 110 g/kg. f

2. Schwefelvernetzbare Kautschukmischung nach Anspruch 1, **dadurch gekennzeichnet, dass** der zumindest eine Ruß eine DBP-Zahl gemäß ASTM D 2414 von 160 bis 190 ml/100 g aufweist.

3. Schwefelvernetzbare Kautschukmischung nach Anspruch 1 oder 2, **dadurch gekennzeichnet, dass** der zumindest eine Ruß eine Jodadsorptionszahl gemäß ASTM D 1510 von 115 bis 135 g/kg aufweist.

4. Schwefelvernetzbare Kautschukmischung nach zumindest einem der vorhergehenden Ansprüche, **dadurch gekennzeichnet, dass** die Kautschukmischung 25 bis 70 phr zumindest eines Rußes, der eine DBP-Zahl gemäß ASTM D 2414 von 140 bis 220 ml/100 g und eine Jodadsorptionszahl gemäß ASTM D 1510 von mehr als 110 g/kg enthält.

5. Schwefelvernetzbare Kautschukmischung nach zumindest einem der vorhergehenden Ansprüche, **dadurch gekennzeichnet, dass** die Kautschukmischung 70 bis 95 phr Naturkautschuk und 5 bis 30 phr Polybutadien enthält.

6. Schwefelvernetzbare Kautschukmischung nach zumindest einem der vorhergehenden Ansprüche 1 bis 4, **dadurch gekennzeichnet, dass** die Kautschukmischung 30 bis 50 phr Naturkautschuk, 30 bis 50 phr Polybutadien und 10 bis 30 phr Styrol-Butadien-Kautschuk enthält.

7. Fahrzeugreifen mit einem Laufstreifen, dessen zumindest mit der Fahrbahn in Berührung kommender Teil aus einer mit Schwefel vulkanisierten Kautschukmischung nach einem der Ansprüche 1 bis 6 besteht.

8. Fahrzeugreifen nach Anspruch 7, **dadurch gekennzeichnet, dass** er ein Nutzfahrzeugreifen ist.

## Claims

1. Sulfur-crosslinkable rubber mixture, especially for the tread of commercial vehicle tyres, comprising at least the following constituents:
- 5 to 95 phr (parts by weight, based on 100 parts by weight of all rubbers in the mixture) of natural rubber,
- up to 95 phr of at least one further diene rubber and
- 30 to 150 phr of at least one carbon black which has a DBP number according to ASTM D 2414 of 140 to 220 ml/100 g and an iodine adsorption number according to the ASTM D 1510 of more than 110 g/kg.

2. Sulfur-crosslinkable rubber mixture according to Claim 1, **characterized in that** the at least one carbon black has a DBP number according to ASTM D 2414 of 160 to 190 ml/100 g.

3. Sulfur-crosslinkable rubber mixture according to Claim 1 or 2, **characterized in that** the at least one carbon black has an iodine adsorption number according to ASTM D 1510 of 115 to 135 g/kg.

4. Sulfur-crosslinkable rubber mixture according to at least one of the preceding claims, **characterized in that** the rubber mixture comprises 25 to 70 phr of at least one carbon black which has a DBP number according to ASTM D 2414 of 140 to 220 ml/100 g and an iodine adsorption number according to ASTM D 1510 of more than 110 g/kg.

5. Sulfur-crosslinkable rubber mixture according to at least one of the preceding claims, **characterized in that** the rubber mixture contains 70 to 95 phr of natural rubber and 5 to 30 phr of polybutadiene.

6. Sulfur-crosslinkable rubber mixture according to at least one of preceding Claims 1 to 4, **characterized in that** the rubber mixture contains 30 to 50 phr of natural rubber, 30 to 50 phr of polybutadiene and 10 to 30 phr of styrenebutadiene rubber.

7. Vehicle tyre having a tread which at least in its roadway-contacting portion consists of a sulfur-vulcanized rubber mixture according to any of Claims 1 to 6.

8. Vehicle tyre according to Claim 7, **characterized in that** it is a commercial vehicle tyre.

## Revendications

1. Mélange de caoutchoucs réticulable au soufre, en particulier pour la bande de roulement de pneumatiques de véhicules utilitaires, contenant au moins les constituants suivants :
- 5 à 95 phr (parties en poids, par rapport à 100 parties en poids des caoutchoucs totaux dans le mélange) de caoutchouc naturel
- jusqu'à 95 phr d'au moins un autre caoutchouc diène et
- 30 à 150 phr d'au moins un noir de carbone qui présente un indice DBP selon ASTM D 2414 de 140 à 220 ml/100 g et un indice d'absorption d'iode selon ASTM D 1510 de plus de 110 g/kg.

2. Mélange de caoutchoucs réticulable au soufre selon la revendication 1, **caractérisé en ce que** ledit au moins un noir de carbone présente un indice DBP selon ASTM D 2414 de 160 à 190 ml/100 g

3. Mélange de caoutchoucs réticulable au soufre selon la revendication 1 ou 2, **caractérisé en ce que** ledit au moins un noir de carbone présente un indice d'absorption d'iode selon ASTM D 1510 de 115 à 135 g/kg.

4. Mélange de caoutchoucs réticulable au soufre selon au moins l'une des revendications précédentes, **caractérisé en ce que** le mélange de caoutchoucs contient 25 à 70 phr d'au moins un noir de carbone qui présente un indice DBP selon ASTM D 2414 de 140 à 220 ml/100 g et un indice d'absorption d'iode selon ASTM D 1510 de plus de 110 g/kg.

5. Mélange de caoutchoucs réticulable au soufre selon au moins l'une des revendications précédentes, **caractérisé en ce que** le mélange de caoutchoucs contient 70 à 95 phr de caoutchouc naturel et 5 à 30 phr de polybutadiène.

6. Mélange de caoutchoucs réticulable au soufre selon au moins l'une des revendications 1 à 4 précédentes, **caractérisé en ce que** le mélange de caoutchoucs contient 30 à 50 phr de caoutchouc naturel, 30 à 50 phr de polybutadiène et 10 à 30 phr de caoutchouc styrène-butadiène.

7. Pneumatique de véhicule, comportant une bande de roulement dont au moins la partie qui entre en contact avec la voie de circulation consiste en un mélange de caoutchoucs vulcanisé au soufre selon l'une quelconque des revendications 1 à 6.

8. Pneumatique de véhicule selon la revendication 7, **caractérisé en ce qu'**il s'agit d'un pneumatique de véhicule utilitaire.
